# EUROPÄISCHE PATENTANMELDUNG

(11) **EP 0 731 590 A2**
(43) Veröffentlichungstag der Anmeldung: **11.09.1996**
(21) Anmeldenummer: 96103085.5
(22) Anmeldetag: 29.02.1996
(51) Int. Cl.: H04M 1/72, H04Q 7/32

(54) **Mobiltelefon**

(30) Priorität: 06.03.1995 DE 19507697
(71) Anmelder: SIEMENS AKTIENGESELLSCHAFT, 80333 München (DE)
(72) Erfinder: Christal, Philip, 85646 Anzing (DE)

(57) **Zusammenfassung**

Das Mobiltelefon enthält eine Implementierung für eine mit Ja zu bestätigende empfangene Nachricht (Yes Response) und eine Gruppennachricht (Send to Group).

## Beschreibung

Die Erfindung bezieht sich auf ein Mobiltelefon mit einem Tastenfeld mit Wähl- und Funktionstasten und einem Anzeigefeld, mit weiteren Tasten (Soft Keys) sowie mit ggf. im Bedienteil integrierten Sende-/Empfangseinrichtungen (Handheld).

Im GSM (Group Speciale Mobile), dem neuen Mobilfunksystem, werden neue Nachrichtendienste eingeführt und einige von anderen Mobilfunksystemen übernommen. Diese Dienste (Serviceleistungen) beinhalten Textnachrichten. Wie aus anderen Bereichen des Fernsprechwesens erkennbar ist, ist das Verständnis der vielen Merkmalsoperationen beim Benutzer zunächst problematisch, was sich auf die Benutzerakzeptanz auswirkt. Potentielle Mensch-Maschine-Interface-Probleme mit Nachrichtenservice schließen das Wissen ein, daß da eine neue Nachricht wartet, deren Typ zu identifizieren ist und die zugänglich zu machen ist.

In der DE 42 33 066 A1 ist ein Mobiltelefon der eingangs genannten Art beschrieben, das bei einem Nachrichtenservice im Display eine entsprechend bezeichnete Anzeige aufweist und zum Zugriff auf die anstehende Nachricht auffordert. Durch Drücken einer Taste (Soft Key) zeigt eine Displayanzeige den Typ der Nachricht und deren Status an, mittels weiterer Tasten (Soft Keys) wird die erste von den Kurznachrichten (SMS - Short Message Service) angezeigt, die nach einem Rollsystem aufgelistet werden können.

Die Aufnahme weiterer Funktionen ist aufgrund der physikalischen Gegebenheiten eines Handhelds mit einem kleinen Display und Tastenfeld schwierig.

Der Erfindung liegt die Aufgabe zugrunde, für ein Mobiltelefon eine Lösung für weitere benutzerfreundliche Funktionalitäten anzugeben.

Diese Aufgabe wird gemäß der Erfindung gelöst durch eine Implementierung von Einrichtungen zur Bearbeitung von Nachrichten und deren Aussendung in der Weise, daß empfangene, mit "Ja" zu bestätigende Nachrichten durch Betätigung einer Soft-Key-Taste und einer Ja-Eingabe mit einem bejahenden Nachtrag an den Absender zurückgesendet werden.

Eine weitere vorteilhafte Ausgestaltung des Mobiltelefons ist gekennzeichnet durch eine Implementierung von Einrichtungen für die Aussendung einer Gruppennachricht derart, daß bei Betätigung einer Taste "Gruppe" eine für mehrere Empfänger bestimmte Nachricht nacheinander an die vorbestimmte Anzahl der in einem Phonebook des Mobiltelefons markierten Empfänger gesendet wird.

Das erfindungsgemäße Mobiltelefon mit selbsterklärender Handhabung und Bedienerführung besitzt eine MMI (Mensch-Maschine-Interface)-Ausgestaltung, mit der eine einfache Bearbeitung von Nachrichten, Senden und Empfangen sowie auch die Rücksendung empfangener Textnachrichten möglich sind. Das Short-Message-System (SMS) ist hierbei erstmals als SMS MO (SMS Mobile Originated) ausgebildet. Hierbei werden Nachrichten originär im Mobiltelefon erstellt. Dies erfolgt mit einer minimalen Anzahl von Tastendrücken und ohne das Erfordernis einer besonderen Benutzertastatur. Dadurch wird der Nutzen eines vorhandenen Handset-MMI mit einem grafischen Display und zwei Softkeys erweitert.

Nachstehend wird die Erfindung anhand von in der Zeichnung dargestellten Ausführungsbeispielen näher erläutert.

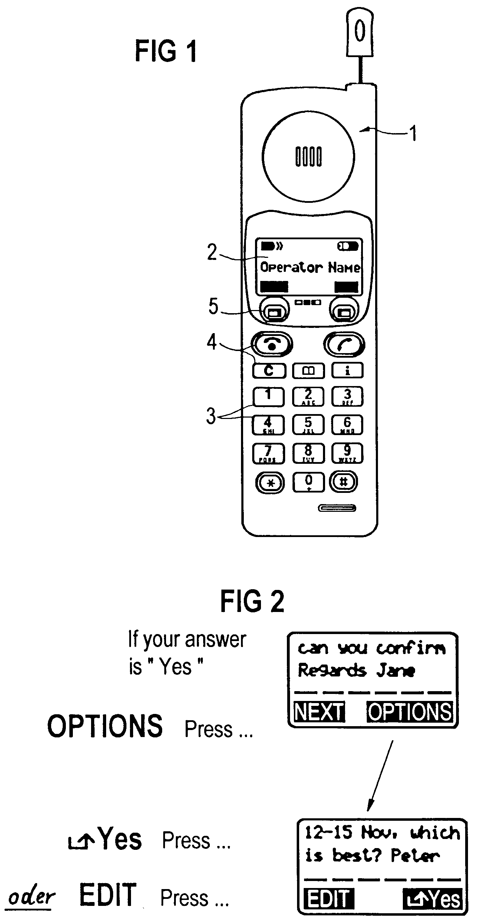

Figur 1 zeigt ein Handheld 1 in einer Draufsicht, das an seiner Oberseite ein Display 2, ein Tastenfeld mit Wähltasten 3 und Informationstasten 4 sowie zwei weitere Tasten 5 (Soft Keys) aufweist, über die Funktionen aufgerufen werden.

Eine Reihe von Mobiltelefonen kann Kurznachrichten (Short Messages) empfangen und einige inzwischen auch eine Nachricht senden. Beim vorliegenden Mobiltelefon besteht auch die Möglichkeit, Nachrichten originär im Mobiltelefon zu erstellen, d.h. ohne die Verwendung zusätzlicher Einrichtungen, z.B. eines PC. Mit den Soft Keys, dem grafischen Display und dem intelligenten Lehrsystem ist dieser Service in vorteilhafter Weise realisiert.

Ein wesentliches Merkmal des erfindungsgemäßen Mobiltelefons betrifft die "Ja-Antwort". Viele Nachrichten sind einfache Ja-/Nein-Fragen zur Bestätigung von Absprachen, Übereinkünften etc. Hierfür ist vorgesehen, daß am Ende einer ankommenden SMS-Nachricht der Benutzer aufgefordert ist, bei Zustimmung eine Ja-Antwort abzugeben. Im Fall einer solchen Entscheidung wird die Nachricht an den Absender zurückgesendet. Hierzu wird durch Drücken eines Soft Key ein bejahender Nachtrag, beispielsweise "Antwort ist Ja" an die Nachricht angehängt sowie ggf. die eigene Rufnummer; durch Drücken der Taste "Senden" wird dann die Nachricht zum ursprünglichen Absender zurückgesendet. Lautet die Antwort "Nein", ist es wahrscheinlich besser, anstelle einer Nein-Antwort anzurufen, um die Antwort zu erläutern oder Alternativen vorzuschlagen. Es kann sein, daß der Inhalt einer Nachricht geändert werden soll, bevor diese zurückgesendet oder weitergeleitet wird. In diesem Fall ist am Ende der Nachricht wie folgt vorzugehen: Soft Key "Options" drücken und "Edit" drücken (siehe hierzu Figur 2). Es kann zunächst die Zielrufnummer geändert oder bestätigt werden. Daraufhin erscheint oben links des grafischen Display ein Cursor. Die Nachricht kann nun in der gewünschten Weise bearbeitet werden. Das Schreiben von Nachrichten kann einige Zeit in Anspruch nehmen. Um diesen Aufwand auf ein Mindestmaß zu beschränken, können Muster erstellt werden. Diese lassen sich auch aus ankommenden Nachrichten aufbauen und können nach Bedarf gespeichert, bearbeitet und gesendet werden.

Eine weitere vorteilhafte Ausgestaltung des erfindungsgemäßen Mobiltelefons besteht darin, Nachrichten nacheinander an einige Empfänger zu senden. Es kann sich hierbei beispielsweise um Mitglieder eines Arbeitsteams handeln oder darum, mehreren Personen Verabredungen oder Angebote mitzuteilen. Hierfür ist eine "Gruppen"-Taste vorgesehen, die als Teil des üblichen Nachrichtensendevorgangs angeboten wird. Durch Drücken dieser Taste wird bewirkt, daß die Nachricht nacheinander zu den vorbestimmten Empfängern gesendet wird. Das MMI ermöglicht die Erstellung einer Gruppe, indem die entsprechenden Teilnehmer in einem Telefonbuch (Phonebook) des Mobiltelefons markiert werden. Nach Selektierung der Teilnehmer wird die Nachricht nacheinander an diese gesendet.

## Patentansprüche

1. Mobiltelefon mit einem Tastenfeld mit Wähl- und Funktionstasten und einem Anzeigefeld, mit weiteren Tasten (Soft Keys) sowie mit ggf. im Bedienteil integrierten Sende-/Empfangseinrichtungen (Handheld), **gekennzeichnet** durch eine Implementierung von Einrichtungen zur Bearbeitung von Nachrichten und deren Aussendung in der Weise, daß empfangene, mit "Ja" zu bestätigende Nachrichten durch Betätigung einer Soft-Key-Taste und einer Ja-Eingabe mit einem bejahenden Nachtrag an den Absender zurückgesendet werden.

2. Mobiltelefon mit einem Tastenfeld mit Wähl- und Funktionstasten und einem Anzeigefeld, mit weiteren Tasten (Soft Keys) sowie mit ggf. im Bedienteil integrierten Sende-/Empfangseinrichtungen (Handheld), **gekennzeichnet** durch eine Implementierung von Einrichtungen für die Aussendung einer Gruppennachricht derart, daß bei Betätigung einer Taste "Gruppe" eine für mehrere Empfänger bestimmte Nachricht nacheinander an die vorbestimmte Anzahl der in einem Phonebook des Mobiltelefons markierten Empfänger gesendet wird.

3. Mobiltelefon nach Anspruch 1 oder 2, **gekennzeichnet** durch für die Nachrichtenerstellung- und/oder -bearbeitung verfügbare Muster, die gespeichert sind.
